# EUROPEAN PATENT SPECIFICATION

(11) **EP 4 359 277 B1**
(45) Date of publication and mention of the grant of the patent: **27.05.2026**
(21) Application number: 22828867.6
(22) Date of filing: 07.06.2022
(51) Int. Cl.: B60W 30/18, B60W 30/16, G08G 1/16, G08G 1/052, G08G 1/0962, G08G 1/0967

(54) **METHOD AND CONTROL ARRANGEMENT FOR LIMITING A SPEED REDUCTION OF A VEHICLE; VEHICLE, COMPUTER PROGRAM AND COMPUTER READABLE MEDIUM RELATED TO THE METHOD**
VERFAHREN UND STEUERANORDNUNG ZUR BEGRENZUNG EINER GESCHWINDIGKEITSREDUKTION EINES FAHRZEUGS, FAHRZEUG, COMPUTERPROGRAMM UND COMPUTERLESBARES MEDIUM IM ZUSAMMENHANG MIT DEM VERFAHREN
PROCÉDÉ ET AGENCEMENT DE COMMANDE POUR LIMITER UNE RÉDUCTION DE VITESSE D'UN VÉHICULE ; VÉHICULE, PROGRAMME INFORMATIQUE ET SUPPORT LISIBLE PAR ORDINATEUR ASSOCIÉ AU PROCÉDÉ

(30) Priority: 21.06.2021 SE 2150790
(43) Date of publication of application: 01.05.2024
(73) Proprietor: Scania CV AB, 151 87 Södertälje (SE)
(72) Inventor: BJÖRKMAN, Anders, 647 35 Mariefred (SE); ÖUN, Mikael, 131 42 Nacka (SE)
(74) Representative: Scania CV AB
(86) International application number: PCT/SE2022/050554
(87) International publication number: WO 2022/271062

(56) References cited:
- WO-A1-2020/139814
- KR-A- 20150 029 481
- US-A1- 2013 245 945
- US-A1- 2014 074 370
- US-A1- 2014 343 819
- US-A1- 2017 066 443
- US-A1- 2017 066 443
- US-A1- 2018 362 039

## Description

### Technical field

The invention relates to a method and a control arrangement for controlling a speed of a vehicle by limiting the vehicle's speed reduction before a road crest. The invention also relates to a computer program, a computer-readable medium and a vehicle comprising such a control arrangement.

### Background

The following background description constitutes a description of the background to the invention, which does not necessarily have to constitute prior art.

Motor vehicles, and especially heavy motor vehicles such as trucks and buses, are affected by gravity on downhill gradients in such a way that propelling the vehicle requires less engine torque. When the gradient increases the vehicle accelerates even when no positive engine torque is provided. For this reason, many heavy vehicles are equipped with a downhill speed control, DHSC, system arranged to limit the speed of the vehicle so that it does not exceed a predetermined value.

Energy-economizing cruise controls, aiming to reduce fuel consumption by adjusting the vehicle's speed to the characteristics of the road ahead, are also becoming increasingly common. For example, by taking into account topographic information about the road section ahead of the vehicle, the vehicle speed may be temporarily decreased before e.g., a downhill slope, allowing the vehicle to accelerate and avoid unnecessary braking in the downhill slope. In this way, a total energy consumption can be reduced.

Automatic speed decrease may, in certain situations, be perceived as stressful for the driver of the vehicle. For example, in heavy traffic, such speed decrease may disturb a natural flow of the traffic causing traffic queues building up behind the vehicle. The driver may therefore choose to inactivate cruise control driving modes where automatic speed reductions are done, which may lead to increased energy consumption.

US2018362039A1 discloses a method for adaptively controlling vehicle speed. In particular, the speed is reduced shortly before the crest of an uphill grade.

Hence, there is a need for an improved vehicle speed control function.

### Summary

It is an object of embodiments of the invention to alleviate or solve at least some of the drawbacks with the prior art.

Thus, it is an object to provide a solution for controlling the speed of the vehicle to mitigate a risk of queues.

According to a first aspect of the invention, aforementioned and further objectives are achieved through a method for controlling a speed of a vehicle in an upcoming road section comprising a road crest. The method comprises determining a speed reduction to be performed before reaching the road crest based on at least a gradient of a downhill slope following the road crest. The method further comprises determining whether the upcoming road section has a single lane or multiple lanes. The method further comprises controlling the speed of the vehicle in the upcoming road section based on the speed reduction and based on whether the upcoming road section has a single lane or multiple lanes, wherein the speed reduction is limited when the upcoming road section has a single lane compared to when the upcoming road section has multiple lanes.

In other words, the invention relates to a method to automatically control the speed of a vehicle based on number of lanes in the upcoming road section to mitigate the risk of traffic queues. The method according to the invention may be implemented in a cruise controller function.

In this way, the speed of the vehicle may be adapted to the prevailing road conditions taking into consideration the risk of queues arising behind the vehicle.

For example, when the upcoming road section is a single lane road section, it may be determined that a speed reduction should be limited compared to the case when the upcoming road section is a multiple lane road section. Reducing the speed of the vehicle may impact the speed of any vehicle behind the own vehicle. When driving on a single lane road, overtake may not be possible which may cause traffic queues and discomfort of the driver.

Automatic speed decrease prior to a downhill slope is particularly often occurring when the vehicle is driving in economy mode to reduce the vehicle's energy consumption.

Hereby, it may become attractive for the driver to use an energy-economizing mode of the cruise controller function for controlling the speed of the vehicle in situations where the driver otherwise would switch to another mode or simply switch off the cruise controller function. Hence, the energy-saving functionality of the cruise controller may be used more often compared to conventional cruise controller. Controlling the speed of the vehicle according to the method of the invention may result in a more even speed of the vehicle and improved traffic flow where hasty overtakes are avoided. This may contribute to an increased road safety. Moreover, the total energy consumption of the vehicles driving in the upcoming road section may be reduced, since fewer overtakes caused by the vehicle's speed reduction are expected.

Also, the driving experience for the driver of the vehicle may be enhanced and the competitive advantage of the cruise controller according to the invention may be increased.

In an embodiment of the invention, the determining whether the upcoming road section has a single lane or multiple lanes is based on information received from one or more of a camera, a lidar, a radar, map data, an infrastructure device, and an external server or a cloud server.

Hereby, a reliable method of determining whether the upcoming road section has a single lane or multiple lanes is provided in essentially every situation, since it may be performed based of information received in a number of different ways.

In an embodiment of the invention, the determining the speed reduction is further based on a braking capacity of the vehicle in the downhill slope.

Hereby, the speed of the vehicle is controlled in a safe and secure way in the downhill slope, taking into consideration the vehicle's ability to maintain a desired speed and brake the vehicle if necessary.

In an embodiment of the invention, the braking capacity of the vehicle comprises an available auxiliary braking torque.

By using the auxiliary braking torque to brake the vehicle in the downhill slope following the road crest rather than solely using mechanical braking, the speed of the vehicle may be controlled in a reliable and safe way mitigating the risk of brake fading.

In an embodiment of the invention, the braking capacity of the vehicle comprises an available service braking torque.

Hereby, the service braking torque may be used to increase the total braking capacity of the vehicle to momentarily increase the total braking power in the upcoming road section.

In an embodiment of the invention, determining the speed reduction is further based on a desired speed in the downhill slope.

Hereby, a desired speed may be maintained in the downhill slope.

In an embodiment of the invention, the speed of the vehicle in the upcoming road section when the upcoming road section has a single lane is controlled such that the speed reduction is limited to be within 50% of a speed reduction when the upcoming road section has multiple lanes.

Hereby, the risk of traffic queues building up behind the vehicle is mitigated.

In an embodiment of the invention, the speed of the vehicle in the upcoming road section when the upcoming road section has a single lane is controlled such that the speed reduction is limited to be within 25% of a speed reduction when the upcoming road section has multiple lanes.

Hereby, the risk of traffic queues building up behind the vehicle is mitigated.

In an embodiment of the invention, the speed of the vehicle in the upcoming road section when the upcoming road section has a single lane is controlled such that no speed reduction is performed.

Hereby, unnecessary speed decrease limitation and thus, increased energy consumption of the vehicle is avoided.

In an embodiment of the invention, the method further comprises:
determining a traffic condition behind the vehicle; and
determining the speed reduction is further based on the traffic condition behind the vehicle.

Hereby, the speed of the vehicle may be adapted to the amount of traffic behind the vehicle and risk of queues building up behind the vehicle. For example, if determined that reducing the speed of the vehicle may impact the traffic flow in a negative way, the speed reduction may be limited.

In an embodiment of the invention, the determining the speed reduction is further based on the traffic condition and an associated traffic condition threshold value.

Hereby, the speed of the vehicle may be adapted to the amount of traffic behind the vehicle and risk of queues building up behind the vehicle. For example, if heavy traffic is detected no speed reduction may be applied.

In an embodiment of the invention, the determining the traffic condition behind the vehicle is based on information received from one or more of a rear-view camera, a rear-view lidar, a rear-view radar, an infrastructure device, map data and an external server or a cloud server.

Hereby, a reliable method of determining the traffic condition behind the vehicle is provided at essentially any situation, since it may be performed based of information received in a number of different ways.

According to a second aspect, the invention relates to a control arrangement for controlling a speed of a vehicle in an upcoming road section comprising a road crest, the control arrangement being configured to:
determine a speed reduction to be performed before reaching the road crest based on at least a gradient of a downhill slope following the road crest;
determine whether the upcoming road section has a single lane or multiple lanes; and
control the speed of the vehicle in the upcoming road section based on the speed reduction and based on whether the upcoming road section has a single lane or multiple lanes, wherein the speed reduction is limited when the upcoming road section has a single lane compared to when the upcoming road section has multiple lanes.

According to a third aspect of the invention, aforementioned and further objectives are achieved through a vehicle comprising a control arrangement according to the second aspect.

According to a fourth aspect, the invention relates to a computer program comprising instructions which, when the program is executed by a computer, cause the computer to carry out the method according to the first aspect.

According to a fifth aspect, the invention relates to a computer-readable medium comprising instructions which, when executed by a computer, cause the computer to carry out the method according to the first aspect.

### Brief description of the drawings

Embodiments of the invention will be illustrated in more detail below, along with the enclosed drawings, where similar references are used for similar parts, and where:
Figure 1 illustrates a vehicle in which embodiments of the invention may be implemented.
Figure 2 shows a flow chart of a method for controlling a speed of a vehicle according to embodiments of the invention.
Figure 3 illustrates a driving situation where aspects of the invention may be implemented.
Figure 4 schematically illustrates a non-limiting example of controlling the speed of a vehicle in various driving scenarios.
Figure 5 shows a flow chart illustrating how the speed of a vehicle may be controlled in an upcoming road section according to embodiments of the invention.
Figure 6 shows a flow chart of a method for controlling a speed of a vehicle according to embodiments of the invention.
Figure 7 illustrates a control arrangement of the vehicle of Figure 1 according to embodiments of the invention.

### Detailed description

The disclosure proposes a method usable when the speed of a vehicle is to be reduced to e.g. keep the vehicle speed below a reference set speed of a DHSC system, also called a set braking speed. The set braking speed may be understood as a defined threshold speed above which the vehicle is automatically braked when travelling downhill.

When a vehicle approaches a downhill slope, the speed of the vehicle, affected by gravity, may increase. For this reason many vehicles, especially heavy vehicles, are equipped with a DHSC system which is arranged to restrict the speed of the vehicle so that it does not exceed a predetermined value. Historically, energy savings in downhill slopes have been made by reduced or eliminated request of positive engine torque which reduces the energy consumption of the vehicle. The speed control if the speed of the vehicle starts to exceed the predetermined value is performed by means of one or more brakes in the vehicle. However, when a vehicle is braked from a higher speed to a lower speed it loses kinetic energy. If the higher speed has been achieved through the effect of gravitational force, for example on or after a downhill slope, it is positive from the point of view of energy economy to be able to utilize this kinetic energy instead of losing it through braking.

Thus, further energy reduction may be obtained by reducing the speed of the vehicle before the vehicle reaches the downhill slope. In this way, braking of the vehicle may be reduced or avoided in downhill slopes. Speed control taking into consideration future road conditions such as approaching slopes may be done by means of a cruise control function with look ahead functionality.

However, automatic speed decrease applied in conventional look ahead cruise controllers may, in certain situations, be perceived as stressful for the driver of the vehicle. For example, such speed decrease may disturb a natural flow of the traffic causing traffic queues building up behind the vehicle. The driver may then choose to inactivate the cruise control functionality leading to decreased use of the energy-saving functionality of the cruise controller.

Thus, an improved vehicle speed control function is needed to overcome the problems of conventional solutions.

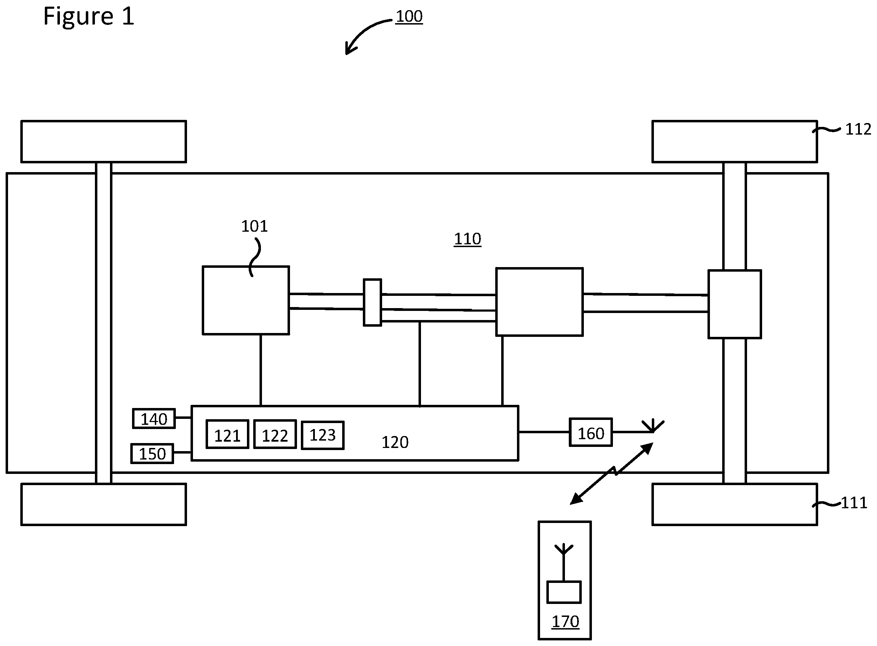

Now turning to Figure 1, which schematically illustrates an exemplary vehicle 100, here a truck, where the proposed method of vehicle speed control may be implemented.

The vehicle 100 comprises a plurality of electrical systems and subsystems. However, for simplicity only some parts of the vehicle 100 that are associated with the proposed method are shown in Figure 1.

Thus, the illustrated vehicle 100 of Figure 1 comprises in a conventional manner a driveline/drivetrain 110 configured to transfer a torque between at least one drive unit 101 and drive wheels 111, 112 of the vehicle 100.

The at least one drive unit 101 may comprise a combustion engine. Additionally, the vehicle may as well as one or more electrical machines for driving drive wheels 111, 112 of the vehicle 100 and may thus for example be a so-called hybrid vehicle.

In another example, the drive unit 101 may include only electrical machines for driving the drive wheels 111, 112, whereby the vehicle 100 may be a pure electrical vehicle.

Heavy vehicles typically comprise a plurality of braking systems (not shown in Figure 1), including a main braking system, usually a friction-based braking system such as wheel brakes, and one or more auxiliary braking systems. Examples of auxiliary braking systems are an exhaust braking system, an engine braking system, and a retarder but are not limited thereto. The retarder may be a hydraulic braking system or an electromagnetic braking system. In vehicles powered by electric motors, the electric motor can be used to provide braking torque.

The driveline/drivetrain 110 and its components is controlled by the vehicle's control system via at least one control arrangement 120 wherein the disclosed invention may be implemented. The at least one control arrangement 120 is, for example, responsible for one or a plurality of cruise controller functions for automatically controlling the speed of the vehicle. These cruise controller functions can be of various types. In one example, a cruise controller function may be of a conventional type arranged to maintain a speed set by the driver or the system. Cruise controller function can also be of kind that uses additional information when controlling the speed of the vehicle. For example, the cruise controller function can make use of a look ahead function. A look ahead cruise control, LACC, function consists of a cruise control function that uses knowledge concerning the upcoming section of road, i.e. knowledge about the topography of the road in front of the vehicle, in order to adapt the vehicle velocity based on variations in the road along which the vehicle is travelling. Cruise control function may also include a DHSC system arranged to restrict the speed of the vehicle so that it does not exceed a predetermined value.

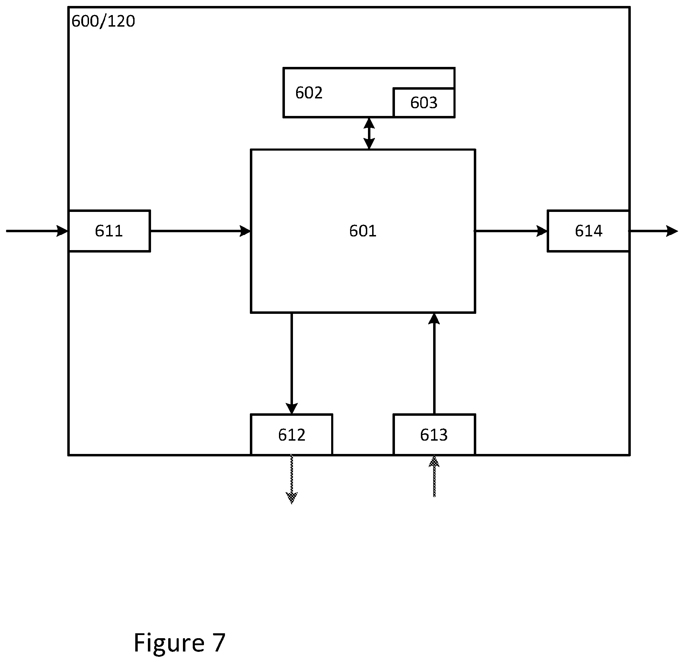

The control arrangement 120 may be distributed on several control units configured to control different parts of the vehicle 100. The control arrangement 120 may e.g. include a speed reduction determining unit 121, a determining unit 122, and a speed controlling unit 123 arranged for performing the method steps of the disclosed invention as is explained further. The control arrangement 120 will be described in further detail in Figure 7.

The vehicle 100 may further include at least one sensor 140, e.g. a camera, a lidar, a radar etc. situated at suitable positions within the vehicle 100.

Further, the vehicle 100 may comprise a positioning system/unit 150. The positioning unit 150 may be based on a satellite navigation system such as the Navigation Signal Timing and Ranging, Navstar, Global Positioning System, GPS, Differential GPS, DGPS, Galileo, GLONASS, or the like. Thus, the positioning unit may comprise a GPS receiver.

The vehicle 100 may further include at least one communication device 160 arranged for communication with at least one entity 170 external to the vehicle 100, such as e.g. an infrastructure entity, an external server, a cloud server, a positioning information entity and/or at least one communication entity of another vehicle.

According to various embodiments of the invention, the at least one communication device 160 may be essentially any device transferring information to and/or from the vehicle 100, and the at least one entity 170 external to the vehicle 100 may be essentially any external entity communicating with the vehicle 100, i.e. with the at least one communication device 160, for the transfer of the information to and/or from the vehicle 100. The at least one communication device 160 may be a vehicle-to-vehicle, V2V, communication device, a vehicle-to-infrastructure, V2I, communication device, a vehicle-to-everything, V2X, communication device, and/or a wireless communication device such that communication between the vehicle 100 and the at least one external entity 170 is achieved/provided.

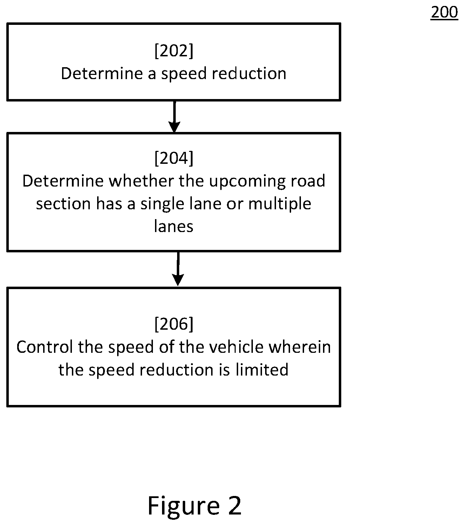

The proposed solution will now be described with reference to Figure 2 which shows a flow chart of a method 200 for controlling a speed of a vehicle in an upcoming road section comprising a road crest. The method 200 comprises steps 202 - 206.

In step 202 in Figure 2, a speed reduction to be performed before reaching the road crest may be determined, based on at least a gradient of a downhill slope following the road crest.

In step 204 in Figure 2, it may be determined whether the upcoming road section has a single lane or multiple lanes. Determining that the road section comprises multiple lanes may here indicate that when the speed of the vehicle is reduced according to the speed reduction determined in step 202, the traffic flow may not be severely disturbed because any vehicle behind has a possibility to overtake the vehicle. However, when driving on a single lane road, a speed reduction may cause traffic queues behind the vehicle as overtaking the vehicle may not be possible.

In step 206 in Figure 2, the speed of the vehicle in the upcoming road section may be controlled based on the speed reduction and based on whether the upcoming road section has a single lane or multiple lanes, wherein the speed reduction may be limited when the upcoming road section has a single lane compared to when the upcoming road section has multiple lanes.

In other words, if the upcoming road section has multiple lanes, the speed of the vehicle is controlled such that the speed reduction determined in step 202 is applied before reaching the road crest. However, if the upcoming road section has a single lane, the speed of the vehicle is controlled such that the speed reduction is limited compared to when the road section has multiple lanes.

The vehicle here may be the vehicle 100 as described in Figure 1. The speed of the vehicle may here be controlled automatically by means of a control arrangement such as a cruise control function.

By executing the steps 202 - 206 of the method 200, a speed reduction to be performed before the vehicle reaches the downhill slope may be limited when it is determined that the upcoming road section has a single lane. Thus, as previously described, the risk of queues building up behind the vehicle 100 may be reduced.

It should be noted that the method steps of method 200 and described herein do not necessarily need to be executed in the order illustrated in Figure 2. The steps may essentially be executed in any suitable order, as long as the physical requirements and the information needed to execute each method step is available when the step is executed.

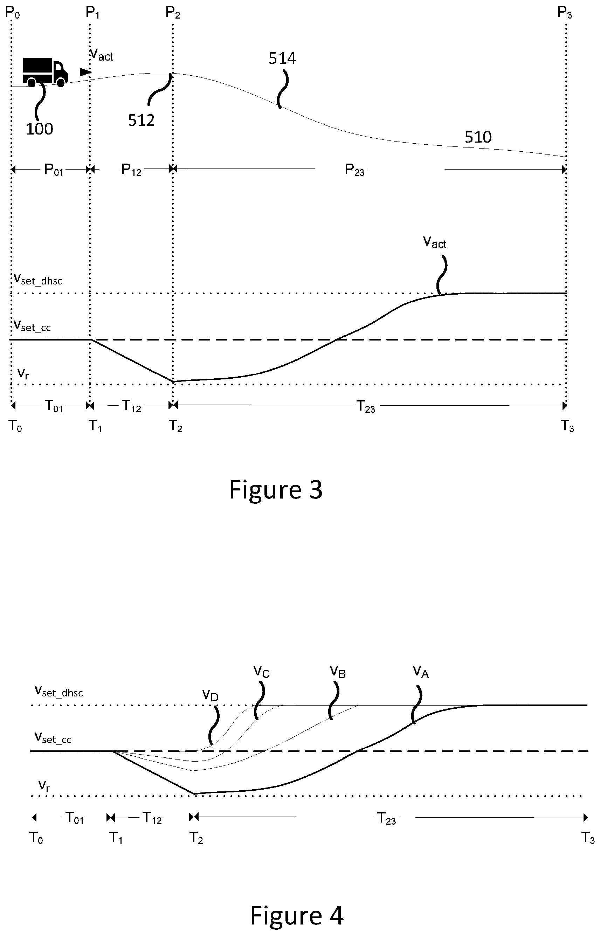

The aspects of method 200 and further embodiments of the invention will now be explained in more detail with reference to Figure 3.

Figure 3 illustrates a vehicle, which may correspond to the vehicle 100 of Figure 1, in a driving situation where the aspects of method 200 illustrated in Figure 2 and further embodiments of the method may be implemented. The vehicle 100 is driving with a current speed v_{act} through a route. The actual speed v_{act} of the vehicle may be controlled automatically by a cruise control function, e.g. a look ahead cruise control taking into account future road conditions. The cruise control function may include a DHSC system.

In order to describe the driving situation and the automatic control of the vehicle's speed in the upcoming road section 510 in Figure 3 the upcoming road section 510 has been divided up into three sections P₀₁ - between the position P₀ and P₁, P₁₂ - between the positions P₁ and P₂ and P₂₃ - between the positions P₂ and P₃, and corresponding periods of time T₀₁, T₁₂ and T₂₃. This disclosure alternately uses points of time and positions along with periods of time and distances to explain the invention. It should therefore be appreciated that points of time and periods of time as well as positions and sections respectively constitute different units used to describe one and the same sequence of events according to the invention.

The driving situation starts at an initial time T₀ at an initial position P₀ where 510 refers to an upcoming road section shown as a contour at the top of Figure 3. Here the upcoming road section 510 comprises a road crest 512 at a position P₂ followed by a downhill slope 514 between positions P₂ and P₃. The road crest may here be a road section preceding the downhill section. The upcoming road section may be a single lane road section or a road section comprising several lanes.

Below the contour of the upcoming road section 510, the actual speed of the vehicle 100 v_{act} is shown. The actual speed is controlled according to the method 200 shown in Figure 2 as will be explained in more detail further on.

As may be seen in Figure 3, the actual speed of the vehicle v_{act} at the initial position is controlled around a level for the set speed v_{set_cc} for the cruise control function which is shown as a dashed line at a constant level. Figure 3 also shows a level for the set speed v_{set_dhsc} for the DHSC system, i.e. the braking speed (dotted line at a constant level). Conventionally a set speed may be controlled within a predetermined offset.

When it is determined that a downhill section 514 is approaching, a speed reduction to be performed before reaching the road crest 512 may be determined according to step 202 of method 200. The strategy of controlling the speed of the vehicle may be based on a number of parameters. For example, the driver may impact the vehicle speed by selecting a driving mode. A driving mode may comprise for example a power mode, an economy mode, a standard mode, an electric mode, and/or a silent mode. In economy mode fuel consumption may be prioritized and a speed reduction may be performed prior to entering the downhill slope. In e.g. power mode a significant decrease in speed may not be allowed.

The speed reduction may be determined based on at least a gradient of the downhill slope 514 following the road crest.

In one example, the speed reduction may be determined according to conventional methods using e.g. Newton's laws of motion to estimate the manner in which the speed of the vehicle 100 will change when driving through an upcoming section of the road. Different speed reduction strategies for the road section, such as reduced request of positive engine torque, dragging, freewheeling etc., may be evaluated where the reduction of the speed of the vehicle 100 before the vehicle reached the crest 512 is followed by an increase of the speed of the vehicle 100 in the downhill slope.

In embodiments, determining 202 the speed reduction may further be based on the desired speed in the downhill slope, i.e. the set speed v_{set_dhsc} for the DHSC system.

Thus, the speed reduction may be determined to maintain the braking speed, i.e. the set speed v_{set_dhsc} for the DHSC system and at the same time minimize the vehicle's energy consumption. If the vehicle is travelling downhill and accelerates so that the braking speed is reached, one or more of the vehicle's brakes is/are engaged so that the vehicle speed is maintained at or below the braking speed. If no speed is set for the DHSC system, the desired speed in the downhill slope may e.g. be determined based on legal speed limits related to the corresponding road section. For example, in Europe, a typical speed limit may be 90 km/h.

To control the actual speed of the vehicle v_{act}, the braking capacity i.e. the available braking power (for example braking force or braking torque) of the different braking systems of the vehicle typically has to be known. The available braking capacity may be the braking power which is determined to be available along the upcoming road section 510. The available braking capacity may depend on different factors such as engine speed and at least the temperature within the different components of the braking system of the vehicle, e.g. the temperature related to the friction-based service brakes or the oil temperature of the retarder. In a long slope the available braking capacity may e.g. be limited by an upper temperature limit of the friction brakes. Exceeding this limit may lead to deteriorated braking effect of the friction brakes and possibly to brake fading. In other words, in embodiments determining 202 the speed reduction may further be based on a braking capacity of the vehicle 100 in the downhill slope. The vehicle speed may influence the available braking capacity and may thereby also be considered, for example by determining the available braking capacity based on a simulated vehicle speed of the vehicle along the upcoming road section 510.

The available braking capacity may depend on which braking system is used to brake the vehicle 100. In embodiments, the braking capacity of the vehicle 100 may comprise an available auxiliary braking torque. The auxiliary braking torque may be delivered by engaging one or more auxiliary brakes, such as a retarder or an engine brake in the form of a compression release brake, exhaust brake or electrical engine brake.

In some situations it may be required to use the one or more auxiliary brakes to brake the vehicle in a reliable and safe way rather than solely using mechanical braking e.g. to avoid fading of mechanical brakes in downhill slopes.

The braking capacity of the vehicle 100 may in embodiments further comprise an available service braking torque. The auxiliary braking torque may be delivered by engaging one or more friction-based brakes e.g. brake discs with associated brake linings situated adjacent to each wheel.

However, as previously explained, excessive use of friction-based brakes in a downhill slope may not be safe due to buildup of heat in the braking surfaces and the subsequent changes and reactions in the brake system components causing loss of stopping power, or fade. The usage of service brakes in downhill slopes may e.g. be limited by allowed temperature thresholds in the components of the service brakes. To protect the service brakes from overheating, the vehicle speed must be reduced. If there is a risk of overheating the service brakes, a speed reduction should not be limited.

To determine the vehicle's speed and the speed reduction, the required brake force along the upcoming road section 510 may need to be known as well. The required brake force may be determined using commonly known techniques based on road gradient and on a mass of the vehicle. The mass of the vehicle may in this case be a measured or otherwise determined, for example estimated, total mass of the vehicle. The mass may typically be determined by a mass estimation algorithm based on either information from a suspension of the vehicle or on a measured or estimated moment of inertia of the vehicle. Also, other variables may be considered in estimation of required brake force, such as air resistance, rolling resistance and powertrain friction.

To determine the speed reduction, different speed scenarios for the upcoming road section 510, corresponding to using one or more of available braking systems, may be calculated or simulated based on available brake power compared with the required braking force. For example, a simulation may be used to determine the vehicle speed at the crest 512 of the downhill slope 514, such that the vehicle 100 may maintain a certain speed in the downhill slope, e.g., the set braking speed, if a certain braking system, a combination of braking systems or no braking systems is used.

In step 204 of method 200 it is determined whether the upcoming road section 510 has a single lane or multiple lanes. A single lane road section may here be a road section with a single lane in the direction of travel of the vehicle 100. Similarly, a section comprising several lanes may here be a road section where at least two lanes may be used to travel in the same direction as the vehicle 100.

In embodiments, determining 204 whether the upcoming road section 510 has a single lane or multiple lanes may be based on information received from the sensor means 140 located in the vehicle 100. For example, the number of lanes may be determined by processing and analyzing information provided by at least one imaging unit, such as a camera, a lidar, a radar or any other unit configured to sense the environment around the vehicle and provide image- or video information thereof to control unit of the vehicle. The number of lanes may thus be determined in a control unit of the vehicle 100 by processing the received image or video information e.g. based on lane markings, surrounding traffic condition, traffic signs to mention a few. Such image- and/or video processing may furthermore use machine learning technology to efficiently distinguish characteristics of the upcoming road section 510 including information related to number of lanes. The accuracy of such determining may be further increased by using sensor fusion technology combining information from several sensor.

Furthermore, number of lanes may be determined 204 based on map data information. Map data e.g. from digital maps may comprise road related information, such as number of lanes which may be used in combination with positioning information, such as GPS. With the help of positioning information, the vehicle's position in relation to the map data may be determined. Map data may be broadcasted from at least one external remote server using e.g. wireless signaling and received by the vehicle 100 via the at least one communication device 160 or may be stored locally in the vehicle 100 and compared to the current GPS location of the vehicle 100.

Determining 204 whether the upcoming road section 510 has a single lane or multiple lanes may further be done by the at least one external entity 170 e.g. an infrastructure device and communicated to the vehicle 100 via the at least one communication device 160 using e.g. V21 communication.

In a further non-limiting example determining 204 whether the upcoming road section 510 has a single lane or multiple lanes may be based on offboard information received from e.g. an external server or a cloud server. The vehicle 100 may, e.g. send its GPS position, or a position of the upcoming road section 510 to the external server or the cloud server and request information related to the number of files in that position.

As previously explained in step 206 of method 200, when it has been determined whether the upcoming road section 510 has a single lane or multiple lanes the actual speed of the vehicle v_{act} may be controlled in the upcoming road section 510 as shown in Figure 3.

As may be seen in the exemplary driving situation depicted in Figure 3, during time period T₁₂, the actual speed of the vehicle v_{act} is decreased from the set speed v_{set_cc}. In the non-limiting example depicted in Figure 3, the speed is reduced to a speed level vᵣ. As will be explained further, the speed reduction may be limited based on a number of parameters. At time instance T₂ the vehicle enters the downhill slope 514 and, due to the gravitational force, the actual vehicle speed v_{act} starts to increase again and reaches eventually the set speed v_{set_dhsc} for the DHSC system.

The actual speed of the vehicle v_{act} may be based on the speed reduction and based on whether the upcoming road section has a single lane or multiple lanes.

A single lane may be not wide enough to allow vehicles to overtake other vehicles. For a vehicle to be able to overtake another vehicle when driving on a single lane road, it may have to, during the overtake use a lane in an opposite direction which may be dangerous and not always possible. On the other hand, when a road section comprises at least two lanes, one of the lanes may be used for passing other vehicles. Passing another vehicle may thus be easily done unless the traffic density in the lane used for overtaking is dense.

Thus, when driving on a road with multiple lanes, speed reduction of vehicle 100 may not contribute to traffic queues, since other vehicles may overtake the vehicle 100. Therefore, when driving on a multiple lane road, the speed reduction may not need to be limited.

On the other hand, when driving on a single lane road, the traffic flow may be affected if the actual speed of the vehicle v_{act} is reduced. Other vehicles may not be able to pass the vehicle 100 which may lead to queues building up. As previously explained, this may be perceived as stressful by the driver of the vehicle 100. Therefore, when driving on a single lane road, the speed reduction may be limited to some degree compared to when the upcoming road section has multiple lanes, as will be explained further.

Now turning to Figure 4 schematically showing a non-limiting example of controlling the speed of a vehicle in various driving scenarios.

The vehicle in Figure 4 may be the vehicle 100 driving on an upcoming road section corresponding to the upcoming road section 510 disclosed in Figure 3.

The time instances T₀, T₁, T₂ and T₃ and the time periods T₀₁, T₁₂ and T₂₃ in Figure 4 correspond to the descriptive driving situation in Figure 3. The speed levels v_{set_cc}, i.e., the set speed for the cruise control, v_{set_dhsc}, i.e., the set speed for the **DHSC** system and vᵣ, i.e., a reduced speed level shown in Figure 4 correspond to the speed levels in Figure 3.

Figure 4 shows four different speed profiles v_{A}, v_{B}, v_{C}, v_{D}. All four speed profiles show an initial speed corresponding to the set speed for the cruise control v_{set_cc} during the time period T₀₁. The speed of the vehicle increases when the vehicle is accelerated in the downhill slope 514 during the time period T₂₃.

The speed profile v_{A} may here correspond to the speed profile of a vehicle driving on a road with multiple lanes where a speed reduction has been determined according to step 202 of method 200. In one example, the speed profile v_{A} may correspond to a speed profile determined by a conventional look-ahead energy economizing cruise controller function. However, as will be explained further, the speed reduction of speed profile v_{A} may in another example be limited compared to the speed reduction determined in such a conventional cruise controller function. The speed reduction in speed profile v_{A} is applied prior to the road crest 512 during the time period T₁₂ by decreasing the speed of the vehicle from the speed level v_{sel_cc} maintained by the vehicle prior to the speed reduction to the speed level vᵣ determined by the speed controller.

In the speed profiles v_{B}, vc and v_{D}, the speed of the vehicle is controlled according to step 206 of method 200 e.g., to mitigate the risk of queues building up behind vehicle 100. The speed reduction is here limited in various degrees compared to the speed decrease in speed profile v_{A}. In embodiments, the speed reduction may be limited when the upcoming road section 510 has a single lane compared to when the upcoming road section 510 has multiple lanes.

For example, in the exemplary speed profile v_{B}, the speed reduction is limited to be within 50% of the speed reduction of speed profile v_{A}. Similarly, in the exemplary speed profile vc, the speed reduction is limited to be within 25% of the speed reduction of speed profile v_{A}. In the exemplary speed profile v_{D}, the speed reduction is limited such that no speed reduction is performed at all.

Thus, in embodiments, when the upcoming road section has a single lane, the speed of the vehicle may be controlled such that the speed reduction is limited to be within 50% of a speed reduction when the upcoming road section 510 has multiple lanes.

In another embodiment, when the upcoming road section has a single lane, the speed of the vehicle may be controlled such that the speed reduction is limited to be within 25% of a speed reduction when the upcoming road section 510 has multiple lanes.

In yet another embodiment, when the upcoming road section has a single lane, the speed of the vehicle may be controlled such that no speed reduction is performed.

It should be noted that the speed reduction limitations in Figure 4 only show non-limiting examples of possible speed limitations. The skilled person understands that any speed reduction limitation may be done when controlling the speed of the vehicle 100 according to method 200 without limiting the scope of the invention.

The degree of speed limitation may depend on the braking capacity of the vehicle, the required braking force, the desired speed in the downhill slope etc.

Basically, the degree of limitation of the speed reduction in the upcoming road section may be determined based on if overtaking the vehicle 100 is possible which may in turn be determined based on information related to whether the upcoming road section has a single lane or multiple lanes as well as amount of traffic behind and around the vehicle as will be explained further on. This information may be weighed against the vehicle's braking capacity and if it is possible to exceed the desired speed in the downhill slope 514. For example, if the upcoming road section 510 has a single lane and the desired speed in the approaching downhill slope 514 can be maintained with the vehicle's auxiliary brakes, the speed reduction prior to the crest 512 may be removed.

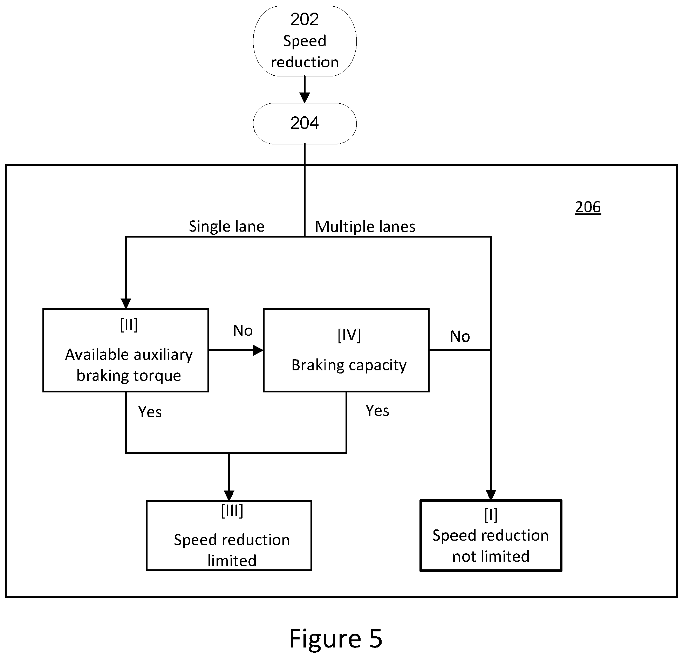

Turning now to Figure 5, showing a flow chart illustrating how the speed of the vehicle 100 may be controlled in the upcoming road section 510 according to embodiments of the invention.

As previously explained, controlling the speed of the vehicle 100, according to the invention may be done when a speed reduction to be performed before reaching the road crest 512 has been determined in step 202 of method 200 and when it has been determined in step 204 whether the upcoming section has a single lane or multiple lanes.

If it has been determined that the upcoming road section 510 has multiple lanes, the speed of the vehicle may be controlled in the upcoming road section 510 according to Step I, i.e. such that the determined speed reduction 202 is not limited.

However, if it has been determined that the upcoming road section 510 has a single lane, the speed reduction in the upcoming road section 510 may, in some cases, be limited compared to the speed reduction in Step I.

The limited speed reduction may be determined as previously described based on the inclination of the approaching downhill slope, the braking capacity of the vehicle, the desired speed of the vehicle to mention but a few considerations or parameters. As previously explained, the braking capacity of the vehicle 100 i.e. the available brake power may be compared with the required braking force in the downhill slope 514 to maintain a desired speed of the vehicle.

For example, if it is determined in step II that the desired speed of the vehicle 100 may be maintained in the approaching downhill slope 514 by the available auxiliary braking torque in the vehicle, i.e. Yes in step II, the speed reduction may be limited in step III such that no speed reduction needs to be performed in the upcoming road section.

However, if it is determined that the available auxiliary braking torque in the vehicle is not large enough so that the desired speed of the vehicle 100 may be maintained in the approaching downhill slope 514, i.e. No in step II, it needs to be determined in step IV if the desired speed of the vehicle 100 may be maintained in the approaching downhill slope 514 by applying both the available auxiliary braking torque and the available service braking torque, i.e. by applying the total braking power in the vehicle.

If determined that the desired speed cannot be maintained, i.e. No in step IV, it may not be possible to limit the speed reduction unless the desired speed is allowed to be exceeded. In that case, the speed of the vehicle may be controlled in the upcoming road section 510 according to Step I, i.e. such that the speed reduction is not limited.

However, if it is determined in step IV that the desired speed of the vehicle 100 may be maintained in the approaching downhill slope 514 by applying the total braking power in the vehicle, i.e. Yes in step IV, the speed reduction may be limited in step III. The limitation of the speed reduction may e.g. depend on threshold values for allowed temperature in the different braking systems or different component of the vehicle's braking system.

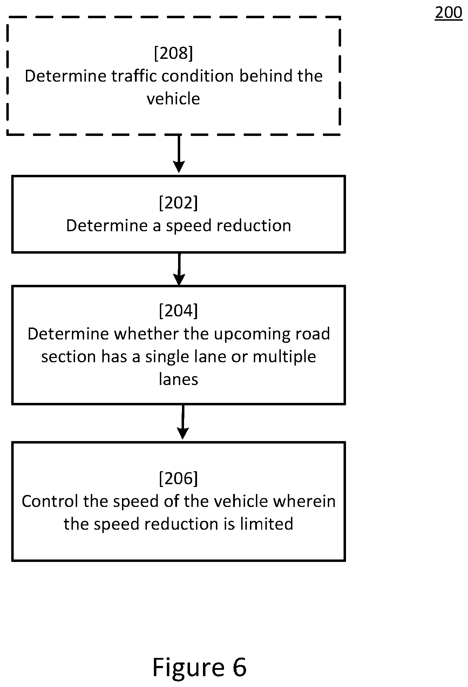

In addition to the method steps 202 - 206, the method 200 may in an embodiment, comprise an optional step 208 as shown in the flow chart in Figure 6.

Apart from the already described method steps 202 - 206, Figure 6 shows the optional step 208 where a traffic condition behind the vehicle 100 may be determined. The traffic condition behind the vehicle 100 may here relate to a number of vehicles driving behind the vehicle 100. The traffic condition may also relate to a perceived traffic density around the vehicle.

Thus, in embodiments, determining 202 the speed reduction may further be based on the traffic condition behind the vehicle 100.

As previously explained, in conventional energy-economizing cruise controls a vehicle's speed may be adjusted by applying a speed reduction prior to a downhill slope to reduce the vehicle's energy consumption. Limiting the speed reduction may adversely affect the vehicle's energy consumption in the upcoming road section 510.

According to the invention, the speed reduction may be limited in cases where there is a risk of queues building up behind the vehicle 100 when the vehicle's speed is reduced. In some situations the risk of queues may be affected by traffic condition behind the vehicle. For example, the traffic condition behind the vehicle 100 may indicate that due to the traffic around the vehicle overtaking may not be possible even if the vehicle is driving on a road with multiple lanes. For example, it may be determined that the traffic behind the vehicle is dense both in the lane where the vehicle is driving and in the lanes used for overtaking the vehicle. This may lead to queues building up behind the vehicle 100 when the vehicle speed decreases. In such situation, the speed reduction determined in step 202 of method 200 may be limited compared to a speed reduction determined in a conventional cruise controller.

In situations where the determined traffic condition behind the vehicle indicates that overtaking the vehicle 100 is possible, the speed reduction determined in step 202 of method 200 does not need to be limited compared to a speed reduction determined in a conventional cruise controller.

In embodiments, the speed reduction may further be based on the traffic condition and an associated traffic condition threshold value.

The traffic condition threshold value may here relate to a predetermined number of vehicles or vehicle density behind or around the vehicle 100 above which the risk of queues building up behind the vehicle is considered substantial. For example, when the vehicle 100 is driving on a road with multiple lanes, overtaking the vehicle 100 may be possible when the traffic density is low. Therefore, a speed reduction determined in step 202 of method 200 does not need to be limited compared to a speed reduction determined according to conventional method since the risk of traffic queues behind the vehicle 100 due to a traffic reduction is small. However, as previously explained, if the traffic around and behind the vehicle 100 is dense, the risk of queues increases since it might not be possible for vehicles behind to overtake the vehicle 100. In such case, the speed reduction of the vehicle 100 determined in step 202 of method 200 may need to be limited compared to a speed reduction determined according to conventional methods, such that no speed reduction is performed. Thus, when the number of vehicles or vehicle density behind or around the vehicle 100 is above the traffic condition threshold value, the speed reduction determined in step 202 of method 200 may need to be limited compared to a speed reduction determined according to conventional methods. Thus traffic below the threshold value may be defined as low density traffic, where it is possible to overtake the vehicle 100. Traffic above the threshold value may be defined as high density traffic, where overtaking the vehicle 100 may not be possible.

In some situations, the determined traffic condition behind the vehicle may not impact the determined speed reduction in step 202 i.e. the speed reduction when the upcoming road section has multiple lanes. However, the speed reduction of vehicle 100 may be limited when the upcoming road section 510 has a single lane compared to when the upcoming road section 510 has multiple lanes.

Merely as an illustrative and very simplified example, assume that the vehicle 100 is driving on a single lane road. If there are no vehicles behind, the speed reduction does not need to be limited compared to when the upcoming road section has multiple lanes.

However, if there are vehicles behind a determination need to be done if and how the speed reduction is to be limited. However, what is acceptable may be a matter of definition of either the vehicle manufacturer or the vehicle driver. For example, if four vehicles are determined driving behind the vehicle 100, the speed reduction may be limited. However, if two vehicles are driving behind the vehicle 100, the speed reduction may not be impacted by the determined traffic condition.

In embodiments, traffic condition behind the vehicle 100 may e.g., be determined based on information from a rear-view camera, a rear-view lidar, a rear-view radar, or information from another vehicle. It may also be retrieved from information obtained from traffic information systems related to the expected travelling route. In systems where there is information exchange between vehicles and/or infrastructure devices, information related to traffic conditions may also be made available to other vehicles, either directly or via an intermediate unit such as a data base or the like. Traffic condition may also be determined on the basis of map data, e.g. from digital maps containing traffic condition information, in combination with positioning information, e.g. GPS information. The positioning information may be used to determine the location of the vehicle relative to the map data so that the road gradient can be extracted from the map data. Various present-day cruise control systems use map data and positioning information. Such systems may then provide the map data and positioning information required for the method according to the present disclosure, thereby minimising the additional complexity involved in determining the traffic conditions.

According to an aspect of the invention, a control arrangement 120 for controlling a speed of a vehicle 100 in an upcoming road section 510 comprising a road crest 512 is presented. The control arrangement 120 includes means 121 arranged for determining a speed reduction to be performed before reaching the road crest 512 based on at least a gradient of a downhill slope 514 following the road crest 512.

The control arrangement 120 further includes means 122 arranged for determining whether the upcoming road section 510 has a single lane or multiple lanes.

The control arrangement 120 further includes means 123 arranged for controlling the speed of the vehicle 100 in the upcoming road section 510 based on the speed reduction and based on whether the upcoming road section 510 has a single lane or multiple lanes, wherein the speed reduction is limited when the upcoming road section 510 has a single lane compared to when the upcoming road section 510 has multiple lanes.

The control arrangement 120, e.g. a device or a control device, according to the invention may be arranged for performing all of the above, in the claims, and in the herein described embodiments method steps. The control arrangement 120 is hereby provided with the above-described advantages for each respective embodiment.

The invention is also related to a vehicle 100 including the control arrangement 120.

Now turning to Figure 7 which illustrates the control arrangement 600/120, which may correspond to or may include one or more of the above-mentioned control units 121 - 123 i.e. the control units performing the method steps of the disclosed invention. The control arrangement 600/120 comprises a computing unit 601, which can be constituted by essentially any suitable type of processor or microcomputer, e.g. a circuit for digital signal processing such as Digital Signal Processor, DSP, or a circuit having a predetermined specific function such as Application Specific Integrated Circuit, ASIC. The computing unit 601 is connected to a memory unit 602 arranged in the control arrangement 600/120, which memory unit provides the computing unit 601 with, e.g., the stored program code and/or the stored data which the computing unit 601 requires to be able to perform computations. The computing unit 601 is also arranged to store partial or final results of computations in the memory unit 602.

In addition, the control arrangement 600/120 is provided with devices 611, 612, 613, 614 for receiving and transmitting input and output signals. These input and output signals can contain waveforms, impulses, or other attributes which, by the devices 611, 613 for the reception of input signals, can be detected as information and can be converted into signals which can be processed by the computing unit 601. These signals are then made available to the computing unit 601. The devices 612, 614 for the transmission of output signals are arranged to convert signals received from the computing unit 601 in order to create output signals by, e.g., modulating the signals, which can be transmitted to other parts of and/or systems in the vehicle 100.

Each of the connections to the devices for receiving and transmitting input and output signals can be constituted by one or more of a cable; a data bus, such as a Controller Area Network, CAN, bus, a Media Orientated Systems Transport, MOST, bus, or some other bus configuration; or by a wireless connection. A person skilled in the art will appreciate that the above-stated computer can be constituted by the computing unit 601 and that the above- stated memory can be constituted by the memory unit 602.

Control systems in modern vehicles commonly comprise communication bus systems consisting of one or more communication buses for linking a number of electronic control units, ECUs, or controllers, and various components located on the vehicle. Such a control system can comprise a large number of control units and the responsibility for a specific function can be divided amongst more than one control unit. Vehicles of the shown type thus often comprise significantly more control units than are shown in Figures 1 and 6, which is well known to the person skilled in the art within this technical field.

In a shown embodiment, the invention may be implemented by the one or more above mentioned control units 121, 122 and 123. The invention can also, however, be implemented wholly or partially in one or more other control units already in the vehicle 100, or in some control unit dedicated to the invention.

Here and in this document, units are often described as being arranged for performing steps of the method according to the invention. This also includes that the units are designed to and/or configured to perform these method steps.

The one or more control units 121 - 123 are in Figure 1 illustrated as separate units. These units may, however, be logically separated but physically implemented in the same unit or can be both logically and physically arranged together. These units may e.g. correspond to groups of instructions, which can be in the form of programming code, that are input into, and are utilized by a processor/computing unit 601 when the units are active and/or are utilized for performing its method step, respectively.

The person skilled in the art will appreciate that a the herein described embodiments may also be implemented in a computer program, which, when it is executed in a computer, instructs the computer to execute the method. The computer program is usually constituted by a computer program product 603 stored on a non-transitory/nonvolatile digital storage medium, in which the computer program is incorporated in the computer-readable medium of the computer program product. The computer-readable medium comprises a suitable memory, such as, e.g.: Read-Only Memory, ROM, Programmable Read-Only Memory, PROM, Erasable Programmable Read-Only Memory, EPROM, Flash memory, Electrically Erasable Programmable Read-Only Memory, EEPROM, a hard disk unit, etc.

## Claims

1. A method (200) for controlling a speed of a vehicle (100) in an upcoming road section (510) comprising a road crest (512), the method (200) comprising:
determining (202) a speed reduction to be performed before reaching the road crest (512) based on at least a gradient of a downhill slope following the road crest (512), the method being **characterized in** further comprising:
determining (204) whether the upcoming road section (510) has a single lane or multiple lanes; and
controlling (206) the speed of the vehicle (100) in the upcoming road section (510) based on the speed reduction and based on whether the upcoming road section (510) has a single lane or multiple lanes, wherein the speed reduction is limited when the upcoming road section (510) has a single lane compared to when the upcoming road section (510) has multiple lanes.

2. The method (200) according to claim 1, wherein the determining (204) whether the upcoming road section (510) has a single lane or multiple lanes is based on information received from one or more of a camera, a lidar, a radar, map data, an infrastructure device, and an external server or a cloud server.

3. The method (200) according to claim 1 or 2, wherein determining (202) the speed reduction is further based on a braking capacity of the vehicle (100) in the downhill slope.

4. The method (200) according to claim 3, wherein the braking capacity of the vehicle (100) comprises an available auxiliary braking torque.

5. The method (200) according to claim 3 or 4, wherein the braking capacity of the vehicle (100) comprises an available service braking torque.

6. The method (200) according to any one of the preceding claims, wherein determining (202) the speed reduction is further based on a desired speed in the downhill slope.

7. The method (200) according to any one of claims 1 to 6, wherein the speed of the vehicle (100) in the upcoming road section (510) when the upcoming road section has a single lane is controlled such that the speed reduction is limited to be within 50% of a speed reduction when the upcoming road section (510) has multiple lanes.

8. The method (200) according to any one of claims 1 to 6, wherein the speed of the vehicle (100) in the upcoming road section (510) when the upcoming road section has a single lane is controlled such that the speed reduction is limited to be within 25% of a speed reduction when the upcoming road section (510) has multiple lanes.

9. The method (200) according to any one of claims 1 to 6, wherein the speed of the vehicle (100) in the upcoming road section (510) when the upcoming road section has a single lane is controlled such that no speed reduction is performed.

10. The method (200) according to any one of the preceding claims, wherein the method (200) further comprises:
determining (208) a traffic condition behind the vehicle (100); and
determining (202) the speed reduction is further based on the traffic condition behind the vehicle (100).

11. The method (200) according to claim 10, configured to
determining (202) the speed reduction is further based on the traffic condition and an associated traffic condition threshold value.

12. The method (200) according to claim 11, wherein determining (208) the traffic condition behind the vehicle (100) is based on information received from one or more of a rear-view camera, a rear-view lidar, a rear-view radar, an infrastructure device, map data and an external server or a cloud server.

13. A control arrangement (160) controlling a speed of a vehicle (100) in an upcoming road section (510) comprising a road crest (512), the control arrangement (160) being configured to:
determine (202) a speed reduction to be performed before reaching the road crest (512) based on at least a gradient of a downhill slope following the road crest (512), the control arrangement being **characterized in** being further configured to:
determine (204) whether the upcoming road section (510) has a single lane or multiple lanes; and
control (206) the speed of the vehicle (100) in the upcoming road section (510) based on the speed reduction and based on whether the upcoming road section (510) has a single lane or multiple lanes, wherein the speed reduction is limited when the upcoming road section (510) has a single lane compared to when the upcoming road section (510) has multiple lanes.

14. A vehicle (100) comprising a control arrangement (160) according to claim 13.

15. A computer program comprising instructions which, when the program is executed by a computer, cause the computer to carry out the method (200) according to any one of the claims 1 to 12.

16. A computer-readable medium comprising instructions which, when executed by a computer, cause the computer to carry out the method (200) according to any one of the claims 1 to 12.

## Patentansprüche

1. Verfahren (200) zum Steuern einer Geschwindigkeit eines Fahrzeugs (100) auf einem vorausliegenden Straßenabschnitt (510) mit einer Straßenkuppe (512), wobei das Verfahren (200) umfasst:
Bestimmen (202) einer vor Erreichen der Straßenkuppe (512) durchzuführenden Geschwindigkeitsreduktion basierend auf wenigstens einer Neigung eines Gefälles nach der Straßenkuppe (512), wobei das Verfahren **dadurch gekennzeichnet ist, dass** es ferner umfasst:
Bestimmen (204), ob der vorausliegende Straßenabschnitt (510) ein- oder mehrspurig ist; und
Steuern (206) der Geschwindigkeit des Fahrzeugs (100) in dem vorausliegenden Straßenabschnitt (510) basierend auf der Geschwindigkeitsreduktion und basierend darauf, ob der vorausliegende Straßenabschnitt (510) ein- oder mehrspurig ist, wobei die Geschwindigkeitsreduktion begrenzt ist, wenn der vorausliegende Straßenabschnitt (510) einspurig ist, im Vergleich dazu, wenn der vorausliegende Straßenabschnitt (510) mehrspurig ist.

2. Verfahren (200) nach Anspruch 1, wobei das Bestimmen (204), ob der vorausliegende Straßenabschnitt (510) ein- oder mehrspurig ist, auf Informationen basiert, die von einer oder mehreren der folgenden Elemente empfangen werden: einer Kamera, einem Lidar, einem Radar, Kartendaten, einer Infrastrukturvorrichtung und einem externen Server oder einem Cloud-Server.

3. Verfahren (200) nach Anspruch 1 oder 2, wobei das Bestimmen (202) der Geschwindigkeitsreduktion ferner auf einer Bremsleistung des Fahrzeugs (100) in dem Gefälle basiert.

4. Verfahren (200) nach Anspruch 3, wobei die Bremsleistung des Fahrzeugs (100) ein verfügbares Zusatzbremsmoment umfasst.

5. Verfahren (200) nach Anspruch 3 oder 4, wobei die Bremsleistung des Fahrzeugs (100) ein verfügbares Betriebsbremsmoment umfasst.

6. Verfahren (200) nach einem der vorangehenden Ansprüche, wobei das Bestimmen (202) der Geschwindigkeitsreduktion ferner auf einer gewünschten Geschwindigkeit in dem Gefälle basiert.

7. Verfahren (200) nach einem der Ansprüche 1 bis 6, wobei die Geschwindigkeit des Fahrzeugs (100) in dem vorausliegenden Straßenabschnitt (510), wenn der vorausliegende Straßenabschnitt einspurig ist, derart gesteuert wird, dass die Geschwindigkeitsreduktion auf 50 % einer Geschwindigkeitsreduktion begrenzt ist, wenn der vorausliegende Straßenabschnitt (510) mehrspurig ist.

8. Verfahren (200) nach einem der Ansprüche 1 bis 6, wobei die Geschwindigkeit des Fahrzeugs (100) in dem vorausliegenden Straßenabschnitt (510), wenn der vorausliegende Straßenabschnitt einspurig ist, derart gesteuert wird, dass die Geschwindigkeitsreduktion auf 25 % einer Geschwindigkeitsreduktion begrenzt ist, wenn der vorausliegende Straßenabschnitt (510) mehrspurig ist.

9. Verfahren (200) nach einem der Ansprüche 1 bis 6, wobei die Geschwindigkeit des Fahrzeugs (100) in dem vorausliegenden Straßenabschnitt (510), wenn der vorausliegende Straßenabschnitt einspurig ist, derart gesteuert wird, dass keine Geschwindigkeitsreduktion erfolgt.

10. Verfahren (200) nach einem der vorangehenden Ansprüche, wobei das Verfahren (200) ferner umfasst:
Bestimmen (208) einer Verkehrslage hinter dem Fahrzeug (100); und
Bestimmen (202) der Geschwindigkeitsreduktion basiert ferner auf der Verkehrslage hinter dem Fahrzeug (100).

11. Verfahren (200) nach Anspruch 10, das eingerichtet ist zum:
Bestimmen (202) der Geschwindigkeitsreduktion basiert ferner auf der Verkehrslage und einem damit verbunden Verkehrslage-Schwellenwert.

12. Verfahren (200) nach Anspruch 11, wobei das Bestimmen (208) der Verkehrslage hinter dem Fahrzeug (100) auf Informationen basiert, die von einer oder mehreren der folgenden Elemente empfangen werden: einer Rückfahrkamera, einem Rückfahrlidar, einem Rückfahrradar, einer Infrastrukturvorrichtung, Kartendaten und einem externen Server oder einem Cloud-Server.

13. Steueranordnung (160) zum Steuern einer Geschwindigkeit eines Fahrzeugs (100) in einem vorausliegenden Straßenabschnitt (510) mit einer Straßenkuppe (512), wobei die Steueranordnung (160) eingerichtet ist zum:
Bestimmen (202) einer vor Erreichen der Straßenkuppe (512) durchzuführenden Geschwindigkeitsreduktion basierend auf wenigstens einer Neigung eines Gefälles nach der Straßenkuppe (512), wobei die Steueranordnung **dadurch gekennzeichnet ist, dass** sie ferner eingerichtet ist zum:
Bestimmen (204), ob der vorausliegende Straßenabschnitt (510) ein- oder mehrspurig ist; und
Steuern (206) der Geschwindigkeit des Fahrzeugs (100) in dem vorausliegenden Straßenabschnitt (510) basierend auf der Geschwindigkeitsreduktion und basierend darauf, ob der vorausliegende Straßenabschnitt (510) ein- oder mehrspurig ist, wobei die Geschwindigkeitsreduktion begrenzt ist, wenn der vorausliegende Straßenabschnitt (510) einspurig ist, im Vergleich dazu, wenn der vorausliegende Straßenabschnitt (510) mehrspurig ist.

14. Fahrzeug (100) mit einer Steueranordnung (160) nach Anspruch 13.

15. Computerprogramm mit Befehlen, die, wenn das Programm von einem Computer ausgeführt wird, den Computer dazu veranlassen, das Verfahren (200) nach einem der Ansprüche 1 bis 12 auszuführen.

16. Computerlesbares Medium mit Befehlen, die, wenn sie von einem Computer ausgeführt werden, den Computer dazu veranlassen, das Verfahren (200) nach einem der Ansprüche 1 bis 12 auszuführen.

## Revendications

1. Procédé (200) pour commander une vitesse d'un véhicule (100) dans une section de route à venir (510) comprenant une crête de route (512), le procédé (200) comprenant :
la détermination (202) d'une réduction de vitesse à réaliser avant d'atteindre la crête de route (512) sur la base d'au moins une inclinaison d'une pente descendante suivant la crête de route (512), le procédé étant **caractérisé en ce qu'**il comprend en outre :
le fait de déterminer (204) si la section de route à venir (510) a une seule voie ou des voies multiples ; et
la commande (206) de la vitesse du véhicule (100) dans la section de route à venir (510) sur la base de la réduction de vitesse et sur la base du fait que la section de route à venir (510) a une seule voie ou de multiples voies, dans lequel la réduction de vitesse est limitée lorsque la section de route à venir (510) a une seule voie comparativement à lorsque la section de route à venir (510) a de multiples voies.

2. Procédé (200) selon la revendication 1, dans lequel la détermination (204) du fait que la section de route à venir (510) a une seule voie ou de multiples voies est basée sur des informations reçues depuis un ou plusieurs parmi une caméra, un lidar, un radar, des données de carte, un dispositif d'infrastructure et un serveur externe ou un serveur en nuage.

3. Procédé (200) selon la revendication 1 ou 2, dans lequel la détermination (202) de la réduction de vitesse est en outre basée sur une capacité de freinage du véhicule (100) dans la pente descendante.

4. Procédé (200) selon la revendication 3, dans lequel la capacité de freinage du véhicule (100) comprend un couple de freinage auxiliaire disponible.

5. Procédé (200) selon la revendication 3 ou 4, dans lequel la capacité de freinage du véhicule (100) comprend un couple de freinage de service disponible.

6. Procédé (200) selon l'une quelconque des revendications précédentes, dans lequel la détermination (202) de la réduction de vitesse est en outre basée sur une vitesse souhaitée dans la pente descendante.

7. Procédé (200) selon l'une quelconque des revendications 1 à 6, dans lequel la vitesse du véhicule (100) dans la section de route à venir (510) lorsque la section de route à venir a une seule voie est commandée de telle sorte que la réduction de vitesse est limitée pour être dans les limites de 50 % d'une réduction de vitesse lorsque la section de route à venir (510) a des voies multiples.

8. Procédé (200) selon l'une quelconque des revendications 1 à 6, dans lequel la vitesse du véhicule (100) dans la section de route à venir (510) lorsque la section de route à venir a une seule voie est commandée de telle sorte que la réduction de vitesse est limitée pour être dans les limites de 25 % d'une réduction de vitesse lorsque la section de route à venir (510) a des voies multiples.

9. Procédé (200) selon l'une quelconque des revendications 1 à 6, dans lequel la vitesse du véhicule (100) dans la section de route à venir (510) lorsque la section de route à venir a une seule voie est commandée de telle sorte qu'aucune réduction de vitesse n'est réalisée.

10. Procédé (200) selon l'une quelconque des revendications précédentes, dans lequel le procédé (200) comprend en outre :
la détermination (208) d'une condition de circulation derrière le véhicule (100) ; et
la détermination (202) de la réduction de vitesse est en outre basée sur la condition de circulation derrière le véhicule (100).

11. Procédé (200) selon la revendication 10, configuré pour la détermination (202) de la réduction de vitesse est en outre basée sur la condition de circulation et une valeur de seuil de condition de circulation associée.

12. Procédé (200) selon la revendication 11, dans lequel la détermination (208) de la condition de circulation derrière le véhicule (100) est basée sur des informations reçues à partir d'un ou plusieurs parmi une caméra de rétrovision, un lidar de rétrovision, un radar de rétrovision, un dispositif d'infrastructure, des données cartographiques et un serveur externe ou un serveur en nuage.

13. Agencement de commande (160) commandant une vitesse d'un véhicule (100) dans une section de route à venir (510) comprenant une crête de route (512), l'agencement de commande (160) étant configuré pour :
déterminer (202) une réduction de vitesse à réaliser avant d'atteindre la crête de route (512) sur la base d'au moins une inclinaison d'une pente descendante suivant la crête de route (512), l'agencement de commande étant en outre configuré pour :
déterminer (204) si la section de route à venir (510) a une seule voie ou des voies multiples ; et
commander (206) la vitesse du véhicule (100) dans la section de route à venir (510) sur la base de la réduction de vitesse et sur la base du fait que la section de route à venir (510) a une seule voie ou de multiples voies, dans lequel la réduction de vitesse est limitée lorsque la section de route à venir (510) a une seule voie comparativement à lorsque la section de route à venir (510) a de multiples voies.

14. Véhicule (100) comprenant un agencement de commande (160) selon la revendication 13.

15. Programme d'ordinateur comprenant des instructions qui, lorsque le programme est exécuté par un ordinateur, amènent l'ordinateur à effectuer le procédé (200) selon l'une quelconque des revendications 1 à 12.

16. Support lisible par ordinateur comprenant des instructions qui, lorsqu'elles sont exécutées par un ordinateur, amènent l'ordinateur à effectuer le procédé (200) selon l'une quelconque des revendications 1 à 12.
